# EUROPÄISCHE PATENTANMELDUNG

(11) **EP 2 040 353 A1**
(43) Veröffentlichungstag der Anmeldung: **25.03.2009**
(21) Anmeldenummer: 07018541.8
(22) Anmeldetag: 21.09.2007
(51) Int. Cl.: H02K 5/128, H02K 49/10, F04D 13/06

(54) **Spaltrohr und Verfahren zur Herstellung**

(71) Anmelder: SIEMENS AKTIENGESELLSCHAFT, 80333 München (DE)
(72) Erfinder: Bode, Ralf, Dr., 47441 Moers (DE); Lang,Sebastian, 47809 Krefeld (DE)

(57) **Zusammenfassung**

Die Erfindung betrifft ein Spaltrohr (39) und ein Verfahren zur Herstellung desselben. Strömungsmaschine und Antriebsmotor lassen sich in einem Gehäuse unterbringen, wenn im Elektromotor zwischen dem Rotor und dem Stator eine Trennung durch ein rohrförmiges Bauteil, ein sogenanntes Spaltrohr (39) erfolgt. Das Spaltrohr (39) muss hinreichend groß, elektrisch nicht leitfähig und stabil sein. Hierzu wird vorgeschlagen: dass es zumindest zum Teil aus einem keramischen oder glasartigen Material besteht oder es zumindest zum Teil aus einer Polymermatrix besteht, die mittels Fasern verstärkt ist oder es hergestellt wird mittels der folgenden Schritte:
- Füllen einer Kapsel mit einem Pulver,
- Evakuieren der Kapsel,
- Pressen der Kapsel bei einer Temperatur und einem Druck, das die Pulverpartikel zusammensintern oder miteinander verschmelzen, wobei die Kapsel verformt wird.

## Beschreibung

Die Erfindung betrifft ein Spaltrohr und ein Verfahren zur Herstellung desselben.

Strömungsmaschinen und ihre elektrischen Antriebsmotoren sind meist in getrennten Gehäusen untergebracht. Dadurch werden in den Strömungsmaschinen Wellendichtungen benötigt, welche Leckagen des geförderten Fluids nach außen verhindern sollen.

Strömungsmaschine und Antriebsmotor lassen sich ohne wellendichtung in einem Gehäuse unterbringen, wenn im Elektromotor zwischen dem Rotor, der vom Fluid berührt wird, und dem Stator eine Trennung durch ein rohrförmiges Bauteil µerfolgt. Das Bauteil wird wegen seiner Position im Luftspalt als "Spaltrohr" bezeichnet.
Bisher verwendete Spaltrohre haben einen oder mehrere der folgenden Nachteile:
a) Elektrische Leitfähigkeit: Das Spaltrohr erwärmt sich durch Wirbelströme. Die wärme muss abgeführt werden und die Maschine ist insgesamt in ihrer Leistung sehr begrenzt.
b) Geringe Festigkeit: Das Spaltrohr kann nur geringe Differenzen zwischen Innen- und Außendruck aufnehmen. Die Technik eignet sich nicht für Hochdruckmaschinen.
c) Die Fertigungstechnik lässt nur eine geringe Baugröße des Spaltrohrs zu, wodurch die Baugröße der Maschine beschränkt wird.

Bisher konnten nur kleine Maschinen (insbesondere Pumpen) geringerer Leistung mit Spaltrohr bzw. Spalttopf gebaut werden. Folgende Werkstoffe kamen hierbei bisher zum Einsatz:
a) metallische Spezial- bzw. Superlegierungen wie Hastelloy oder Inconel (Nachteil; Die elektrische Leitfähigkeit induziert wirbelströme, die den Wirkungsgrad von Hochleistungskompressoren unakzeptabel herabsetzen würden)
b) CFK, Carbon-Faser verstärkte Kunststoffe (Nachteil: Auch die Kohlefaser hat eine noch zu hohe elektrische Leitfähigkeit, die den Wirkungsgrad von Hochleistungskompressoren - aufgrund der induzierten Wirbelströme - zu stark absenken würde)
c) partikel- oder glasfaserverstärkte sowie unverstärkte Hochleistungspolymere (z. B. FORTRON von der Firma Ticona)
   (Nachteil: Für den Einsatz in Hochdruckkompressoren ist die erreichbare Steifigkeit und Festigkeit viel zu gering)
d) monolithische Technische Keramik wie Zirkoniumdioxid (z. B. FRIALIT von der Firma Friatec).
   (Nachteil: Beim Herstellen von Spalttöpfen wurde bisher zunächst keramisches Pulver kalt-isostatisch verpresst (Grünkörper) und anschließend versintert. Der Sinterprozess verursacht dabei einen Schrumpf von 18-25% sowie festigkeitsreduzierende Gefügefehler. Zudem käme es beim Sintern sehr großer Spaltrohre - wie sie für Hochdruckkompressoren erforderlich sind - zu massebedingten Verformungen, bis hin zu Rissbildungen. Aus diesen Gründen war es bisher nicht möglich, Spaltrohre bzw. Spalttöpfe mit einer Länge deutlich über 300 mm aus einem Stück herzustellen. Zudem ist die mittels dieses Herstellungsverfahrens erreichbare Schadenstoleranz bei Drücken von bis zu 150 bar zu gering)

Die Erfindung hat es sich daher zur Aufgabe gemacht, ein Spaltrohr und ein Verfahren zur Herstellung eines solchen zu schaffen, welches hohe Differenzdrücke zu ertragen vermag.

Zur Lösung wird erfindungsgemäß vorgeschlagen, dass das Spaltrohr zumindest zum Teil aus einem keramischen oder glasartigen Material besteht.

Das keramische/ glasartige Material kann dabei monolithisch sein oder aus einer faserverstärkten Keramik- bzw. Glasmatrix bestehen.
Das monolithische Material sowie die Matrix des Faserverbundwerkstoffs können dabei entweder eine kristalline (d.h. keramische) oder eine amorphe (d. h. glasartige) Struktur oder ein Mischgefüge (d. h. Glaskeramik) aus beidem aufweisen.
Das Spaltrohr kann dabei dadurch hergestellt werden, dass ein entsprechend geeignetes Keramik-/ Glaspulver in eine Kapsel gefüllt wird, welche anschließend bis auf Hochvakuum evakuiert und dann gasdicht verschlossen wird, und danach in einer heiß-isostatischen Pressanlage (HIP) bei hohem Druck und einer geeigneten Temperatur so verpresst wird, dass die Kapsel verformt wird und die Keramik-/ Glaspartikel zusammensintern oder verschmelzen, so dass das Spaltrohr eine endabmessungsnahe Kontur erhält und hermetisch dicht gegen das Fluid der Strömungsmaschine bei allen auftretenden Drücken in der Maschine ist.

Alternativ dazu kann das Keramikpulver mit einem thermischen Spritzverfahren auf einen rotierenden, massiven Dorn aufgetragen und daran anschließend von der Kapsel umschlossen werden.

Das Spaltrohr kann alternativ dazu auch dadurch hergestellt werden, dass entsprechend geeignete keramische Fasern in geeigneter Orientierung unter Zugabe eines Bindemittels auf einen Dorn gewickelt werden, wobei das Bindemittel aus einem keramischen bzw. glasartigen Pulver oder einem Schlicker aus einem keramischen/ glasartigen Pulver bestehen kann, und durch anschließende Wärmebehandlung, welche an Atmosphäre oder an Luft oder in einer HIP-Anlage stattfinden kann, das Bindemittel zusammensintert oder verschmilzt.
Dabei kann der Prozess entweder so geführt sein, dass der gewickelte Faserkörper zunächst nur eine mechanische Grundfestigkeit erhält und noch mechanisch bearbeitet werden kann, oder dass das Spaltrohr unmittelbar die erforderliche Festigkeit und Dichtigkeit für die Anwendung erhält.

Alternativ dazu kann die Dichtheit dadurch erreicht werden, dass die Poren des wärmebehandelten Faserkörpers im Anschluss an oben beschriebenen Prozess verschlossen werden. Dies kann z. B. durch Hochdruckinfiltration mit flüssigem Glas oder durch einen Emaillierungsprozess mit Eintauchen in einen flüssigen Schlicker (Fritte) und anschließendes Brennen oder Glasieren der Oberfläche oder durch andere geeignete Prozesse geschehen.

Mittels des oben beschriebenen HIP-Verfahrens lassen sich monolithische Keramik-Spaltrohre in den für Hochdruckkompressoren geforderten Dimensionen und Festigkeiten - im Gegensatz zu dem bisher eingesetzten zweistufigen kalt-isostatischen Press-/Sinterverfahrens - endkonturennah herstellen. Da hier der Press- und Sinterprozess parallel ablaufen, werden Gefügefehler und Schrumpfungen auf ein Minimum reduziert, massebedingte Verformungen sowie die Gefahr von Rissbildungen vermieden.
Zudem ist es mittels einer heiß-isostatischen Pressanlage möglich, ein Spaltrohr aus einer keramikfaserverstärkten Glasmatrix herzustellen.

Zur Lösung wird erfindungsgemäß außerdem ein Verfahren zum Herstellen eines Spaltrohrs vorgeschlagen, bei dem die folgenden Schritte durchgeführt werden:
- Füllen einer Kapsel mit einem Pulver,
- Evakuieren der Kapsel,
- Pressen der Kapsel bei einer Temperatur und einem Druck, dass die Pulverpartikel zusammensintern oder miteinander verschmelzen, wobei die Kapsel verformt wird.

Die Herstellung eines Spaltrohrs ist insbesondere, wenn dieses aus einem Pulver hergestellt wird, schwierig, da der Rohling nur schwer zu handhaben ist. Daneben sind Spaltrohre verhältnismäßig großformatig und müssen hinreichend maßhaltig gefertigt sein. Das vorgeschlagene Verfahren erfüllt entsprechende Kriterien, weil das Pulver in einer maßhaltigen Kapsel als Rohling eingefüllt ist und diese Kapsel unter gezielter Verformung in ihrem Volumen unter Druck reduziert wird, so dass sich ein Spaltrohr mit hinreichender Annäherung an die Endkontur ergibt. Das sich ergebende Spaltrohr ist nicht nur hinreichend maßhaltig sondern auch stabil. Bei höherer Präzisionsanforderung kann das Spaltrohr mechanisch nachbearbeitet werden. Es können verschiedene Pulver eingesetzt werden, insbesondere glasartige oder keramische. Das Erhitzen kann vereinfacht unter Luftatmosphäre oder unter Vakuum in einer heiß-isostatischen Pressanlage erfolgen. Sollte das fertige Spaltrohr nicht den Anforderungen an die Dichtigkeit genügen, können die Poren mittels einer Hochdruckinfiltration und mit flüssigem Glas oder durch eine Emaillierung mittels Eintauchens in einen flüssigen Schlicker und anschließendes Brennen oder Glasieren geschlossen werden.

Zur Lösung wird erfindungsgemäß außerdem vorgeschlagen, dass das Spaltrohr zumindest zum Teil aus einer Polymermatrix besteht, die mittels Fasern verstärkt ist.

Nachteile bisheriger Spaltrohrkonstruktionen können vermieden werden, wenn ein Spaltrohr aus einer Keramikfaser-verstärkten Polymermatrix verwendet wird. Hierbei können unter anderem Siliziumkarbidfasern oder hochreine Aluminiumoxidfasern oder Zirkoniumdioxidfasern oder auch mullitische Fasern eingesetzt werden. Sämtliche dieser Fasern sorgen für eine hohe Zugbelastbarkeit. Die Belastbarkeit kann weiterhin gesteigert werden, wenn die Verbundart der Fasern optimiert wird, insbesondere, wenn Kurzfasern oder Wirrfasern oder Endlosfasern bzw. Faserbündel (Rovings) sowie Fasermatten (Gewebe, Gelege, usw.) verwendet werden. Die Abrasioneresistenz der Polymermatrix kann vorteilhaft erhöht werden, wenn die Oberfläche des Spaltrohrs zudem zusätzlich mit keramischen Partikeln durchsetzt bzw. beschichtet wird.

Als Fasern können auch für das Spaltrohr hochgeordnete Polymerfasern verwendet werden.

Geeignet sind unter den hochgeordneten Polymerfasern z.B.: PBO-Faser bzw. Zylon-Faser (Handelsname) bzw. Poly(p-phenylen-2,6-benzobisoxazol)-Fasern oder PB(Z) t- bzw. Poly(p-phenylen-2,6-benzobisthiazol)-Fasern oder PIPD-(Handelsname M5) bzw. Polypyridobisimidazol-Fasern.

Die mittels hochgeordneter Polymerfasern verstärkten Polymerwerkstoffe erreichen sehr hohe Festigkeiten und Steifigkeiten, die auf dem Niveau hochmoduliger Kohlefaserverbundwerkstoffe liegen und welche für den Einsatz in Hochdruckmaschinen erforderlich sind. Im Gegensatz zu Kohlefasern zeichnen sich solche Fasern jedoch durch ihren sehr hohen elektrischen Widerstand aus. Daher verursacht ein Spaltrohr aus einer durch hochgeordnete Polymerfasern verstärken Polymermatrix keine Wirkungsgrad reduzierenden Wirbelstromverluste und ist daher für den Einsatz in Hochdruckmaschinen besonders geeignet.

Im Folgenden wird die Erfindung anhand eines speziellen Ausführungsbeispiels unter Bezugnahme auf Zeichnungen näher erläutert. Es zeigen:

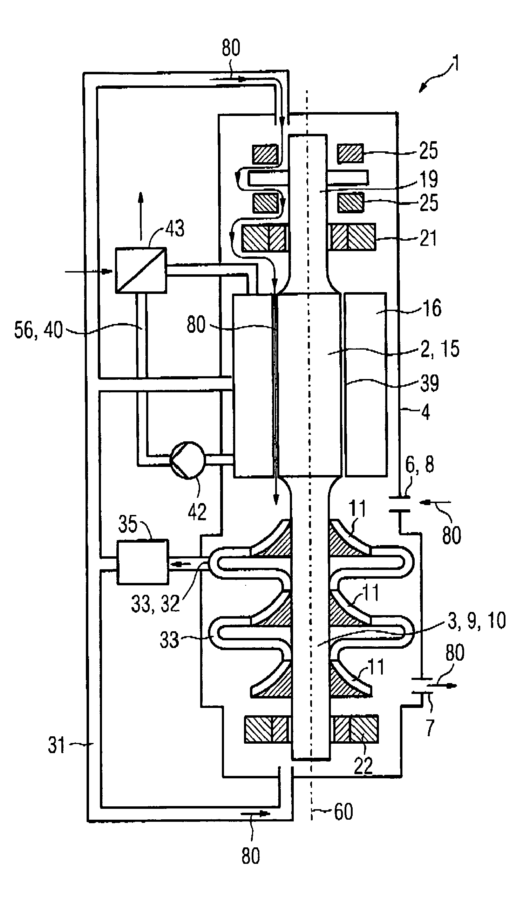

- Figur 1: eine schematische Darstellung eines Längsschnitts durch eine Verdichtereinheit mit einem erfindungsgemäßen Spaltrohr.

Figur 1 zeigt schematisch einen Schnitt längs einer verdichtereinheit 1, welche als wesentliche Bauteile einen Motor 2 und einen Verdichter 3 in einem gasdicht ausgebildeten Gehäuse 4 aufweist. Das Gehäuse 4 beherbergt den Motor 2 und den Verdichter 3. Im Bereich des Übergang von dem Motor 2 zu dem Verdichter 3 ist das Gehäuse 4 mit einem Einlass 6 und einem Auslass 7 versehen, wobei durch den Einlass 6 mittels eines Ansaugstutzens 8 das zu verdichtende Fluid angesaugt wird und durch den Auslass 7 das verdichtete Fluid abströmt.

Die Verdichtereinheit 1 ist im Betrieb vertikal angeordnet, wobei ein Motorrotor 15 des Motors 2 über einem Verdichterrotor 9 des Verdichters 3 zu einer gemeinsamen Welle 19 vereint sind, die sich um eine gemeinsame vertikale Drehachse 60 dreht.

Der Motorrotor 15 ist in einem ersten Radiallager 21 am oberen Ende des Motorrotors 15 gelagert.
Der Verdichterrotor 9 ist mittels eines zweiten Radiallagers 22 in unterer Position gelagert.
Am oberen Ende der gemeinsamen Welle 19 - also am oberen Ende des Motorrotors 15 - ist ein Axiallager 25 vorgesehen.

Der als Zentrifugalverdichter ausgebildete Verdichter 3 weist drei Verdichterstufen 11 auf, die jeweils mittels einer Überströmung 33 in Verbindung stehen.

Die elektromagnetischen Lager 21, 22, 25 sind mittels eines Kühlsystems 31 auf Betriebstemperatur gekühlt, wobei das Kühlsystem 31 eine Anzapfung 32 in einer Überströmung des Verdichters 3 vorsieht. Von der Anzapfung 32 wird mittels Rohrleitungen ein Teil des Fördermediums, welches vorzugsweise Erdgas ist, durch einen Filter 35 geleitet und anschließend durch zwei separate Rohrleitungen zu den jeweils äußeren Lagerstellen (erstes Radiallager 21 und viertes Radiallager 24 sowie Axiallager 25) geführt. Diese Kühlung mittels des kalten Fördermediums 80 erspart zusätzliche Versorgungsleitungen.

Der Motorrotor 15 ist von einem Stator 16 umgeben, der eine auf dem inneren Durchmesser als Spaltrohr 39 ausgebildete Kapselung aufweist, so dass das aggressive Fördermedium 80 Wicklungen des Stators 16 nicht beschädigt, Das Spaltrohr 39 ist hierbei derart ausgelegt, dass es den vollen Betriebsdruck zu ertragen vermag. Dies auch deshalb, weil eine separate Kühlung 40 für den Stator vorgesehen ist, in der ein eigenes Kühlmedium 56 zirkuliert. Eine Pumpe 42 sorgt hierbei für einen Kreislauf über einen Wärmetauscher 43.
Zumindest ist das Spaltrohr 39 derart ausgeführt, dass der Abschnitt, der sich zwischen dem Stator 16 und dem Motorrotor 15 erstreckt zwar eine dünne Wandstärke aufweist jedoch bei einer vollständigen Füllung der Statorkühlung 40 mittels des Kühlmediums 56 in der Lage ist, dem Auslegedruck Stand zu halten. Auf diese Weise werden größere Wirbelstromverluste in diesem Bereich vermieden und der Wirkungsgrad der Gesamtanordnung verbessert sich.

## Patentansprüche

1. Spaltrohr (39),
**dadurch gekennzeichnet, dass**
es zumindest zum Teil aus einem keramischen oder glasartigen Material besteht.

2. Spaltrohr (39) nach Anspruch 1,
**dadurch gekennzeichnet, dass**
das Material des Spaltrohrs (39) monolithisch ist.

3. Spaltrohr (39) nach Anspruch 1,
**dadurch gekennzeichnet, dass**
das Material faserverstärkt ist.

4. Spaltrohr (39) nach einem der Ansprüche 1 bis 3,
**dadurch gekennzeichnet, dass**
das Material amorph ist.

5. Spaltrohr (39) nach einem der Ansprüche 1 bis 3,
**dadurch gekennzeichnet, dass**
das Material kristallin ist.

6. Spaltrohr (39) nach einem der vorhergehenden Ansprüche 1 bis 3,
**dadurch gekennzeichnet, dass**
das Material ein Mischgefüge aus amorphen und kristallinen Bestandteilen ist.

7. Spaltrohr (39),
**dadurch gekennzeichnet, dass**
es zumindest zum Teil aus einer Polymermatrix besteht, die mittels Fasern verstärkt ist.

8. Spaltrohr (39) nach Anspruch 7,
**dadurch gekennzeichnet, dass** die Polymermatrix
mittels hochgeordneter Polymerfasern verstärkt ist.

9. Spaltrohr (39) nach Anspruch 8,
**dadurch gekennzeichnet, dass**
die Polymerfasern Poly(p-phenylen-2,6-benzobisoxazol)-Fasern und/oder Poly(p-phenylen-2,6-benzobisthiazol)-Fasern und/oder Polypyridobisimidazol-Fasern umfassen.

10. Spaltrohr (39) nach Anspruch 7,
**dadurch gekennzeichnet, dass**
es zumindest zum Teil aus einer keramikfaserverstärkten Polymermatrix besteht.

11. Spaltrohr (39) nach Anspruch 10,
**dadurch gekennzeichnet, dass**
die Fasern zumindest zum Teil aus Siliziumcarbid bestehen.

12. Spaltrohr (39) nach Anspruch 10,
**dadurch gekennzeichnet, dass**
die Fasern zumindest zum Teil aus Aluminiumoxid bestehen.

13. Spaltrohr (39) nach Anspruch 10,
**dadurch gekennzeichnet, dass**
die Fasern zumindest zum Teil aus Zirkoniumdioxid bestehen.

14. Spaltrohr (39) nach einem der Ansprüche 7 bis 13,
**dadurch gekennzeichnet, dass**
die Fasern als Kurzfaser, insbesondere in einer Länge zwischen 0,1mm bis 1mm ausgebildet sind.

15. Spaltrohr (39) nach einem der Ansprüche 7 bis 13,
**dadurch gekennzeichnet, dass**
die Fasern einem wirren Verbund miteinander bilden.

16. Spaltrohr (39) nach einem der Ansprüche 7 bis 13,
**dadurch gekennzeichnet, dass**
die Fasern als Endlosfasern, insbesondere in einer Länge von mindestens 30mm ausgebildet sind.

17. Spaltrohr (39) nach einem der Ansprüche 7 bis 13,
**dadurch gekennzeichnet, dass**
die Fasern als Faserbündel, insbesondere als Roving ausgebildet sind.

18. Spaltrohr (39) nach einem der Ansprüche 7 bis 13,
**dadurch gekennzeichnet, dass**
die Fasern als Fasermatte ausgebildet sind.

19. Spaltrohr (39) nach einem der Ansprüche 7 bis 13,
**dadurch gekennzeichnet, dass**
die Fasern als Faserbündel, insbesondere als Roving ausgebildet sind.

20. Spaltrohr (39) nach einem der Ansprüche 7 bis 19,
**dadurch gekennzeichnet, dass**
die Oberfläche des Spaltrohrs (39) mit keramischen Partikeln durchsetzt ist.

21. Verfahren zum Herstellen eines Spaltrohrs (39), **gekennzeichnet durch** die folgenden Schritte:
- Füllen einer Kapsel mit einem Pulver,
- Evakuieren der Kapsel,
- Pressen der Kapsel bei einer Temperatur und einem Druck, dass die Pulverpartikel zusammensintern oder miteinander verschmelzen, wobei die Kapsel verformt wird.

22. Verfahren zur Herstellung eines Spaltrohrs (39), **gekennzeichnet durch** die folgenden Schritte:
- Spritzen eines keramischen Pulvers mit einem thermischen Spritzverfahren auf einen Dorn,
- Einkapseln der Spritzschicht,
- Evakuieren der Kapsel,
- Pressen der Kapsel bei einer Temperatur und einem Druck, dass die Pulverpartikel zusammensintern oder miteinander verschmelzen, wobei die Kapsel verformt wird.

23. Verfahren zum Herstellen eines Spaltrohrs (39), **gekennzeichnet durch** die folgenden Schritte:
- Wickeln von keramischen Fasern auf einen Dorn unter Zugabe eines Bindemittels zu einem Rohling,
- Erhitzen des Rohlings, so dass das Bindemittel zusammensintert oder Partikel des Bindemittels verschmelzen.

24. Verfahren nach Anspruch 23,
**dadurch gekennzeichnet, dass**
das Bindemittel ein keramisches Pulver oder ein glasartiges Pulver oder ein Schlicker aus einem keramischen Pulver und einem glasartigen Pulver ist.

25. Verfahren nach Anspruch 23 oder 24,
**dadurch gekennzeichnet, dass**
das Erhitzen unter Luftatmosphäre erfolgt.

26. Verfahren nach Anspruch 23 oder 24,
**dadurch gekennzeichnet, dass**
das Erhitzen unter Vakuum in einer heiß-isostatischen Pressanlage erfolgt.

27. Verfahren nach einem der vorhergehenden Ansprüche 21 bis 26,
**dadurch gekennzeichnet, dass**
das Spaltrohr (39) mechanisch nachbearbeitet wird.

28. Verfahren nach einem der Ansprüche 21 bis 27,
**dadurch gekennzeichnet, dass**
Poren des Spaltrohrs (39) verschlossen werden.

29. Verfahren nach Anspruch 28,
**dadurch gekennzeichnet, dass**
die Poren durch eine Hochdruckinfiltration mit flüssigem Glas verschlossen werden.

30. Verfahren nach Anspruch 28,
**dadurch gekennzeichnet, dass**
die Poren durch eine Emaillierung mit Eintauchen in einen flüssigen Schlicker verschlossen werden und durch anschließendes Brennen oder Glasieren der Oberfläche des Spaltrohrs (39).
